# EUROPÄISCHE PATENTANMELDUNG

(11) **EP 4 679 021 A1**
(43) Veröffentlichungstag der Anmeldung: **14.01.2026**
(21) Anmeldenummer: 25000074.2
(22) Anmeldetag: 09.07.2025
(51) Int. Cl.: F28D 1/04, B60H 1/00, F28D 1/047, F28D 21/00, F28F 1/32, F25B 39/02, F25B 39/04

(54) **TANDEM-WÄRMETAUSCHER UND HIERMIT AUSGESTATTETE KLIMAANLAGE ZUM HEIZEN UND/ODER KÜHLEN EINES FAHRZEUGINNENRAUMS**

(30) Priorität: 09.07.2024 DE 102024002233
(71) Anmelder: Spheros Germany GmbH, 82205 Gilching (DE)
(72) Erfinder: Scheid, Helmut, 86920 Denklingen (DE); Shabi, Linard, 82110 Germering (DE); Tanke, Dietmar, 82205 Gilching (DE)
(74) Vertreter: Strasser, Wolfgang

(57) **Zusammenfassung**

Ein Tandem-Wärmetauscher (18) umfasst einen ersten Außenluftwärmetauscher (5) mit einem Strömungspfad, der Teil des Kältemittelkreislaufs einer Klimaanlage (2; 52 ) zum Heizen und/oder Kühlen des Innenraums eines zumindest teilweise elektrisch angetriebenen Fahrzeuges ist, und einen zweiten Außenluftwärmetauscher (19) mit einem Strömungspfad, der Teil eines Wärmeträgerkreislaufs ist, der zum Temperieren wenigstens einer Fahrzeug-Komponente (23) dient, wobei die beiden Strömungspfade so voneinander getrennt sind, dass sich die in ihnen zirkulierenden Fluide nicht vermischen können. Um durch die Verwendung eines solchen Tandem-Wärmetauschers ein effizientes Wärmeenergie-Managementsystem für einen elektrisch angetriebenen Omnibus zu schaffen, ist vorgesehen, dass jeder der Strömungspfade jeweils miteinander verbundene Rundrohrabschnitte (26 bzw. 36) umfasst, dass die beiden Außenluftwärmetauscher in Strömungsrichtung der Außenluft (AL) hintereinander angeordnet sind, und dass die Rundrohrabschnitte der beiden Außenluftwärmetauscher mit gemeinsamen Lamellen (45) aus einem wärmeleitenden Material mechanisch verbunden sind, deren Zwischenräume im Betrieb von Außenluft (AL) durchströmt werden.

## Beschreibung

Die Erfindung betrifft einen Tandem-Wärmetauscher der im Oberbegriff von Anspruch 1 genannten sowie eine mit einem solchen Tandem-Wärmetauscher ausgestattete Klimaanlage gemäß Anspruch 11

Unter dem Begriff "Tandem-Wärmetauscher" wird im vorliegenden Text eine Vorrichtung verstanden, bei der drei verschiedene Medien miteinander in Wärmeaustausch treten können, ohne sich dabei zu vermischen.

Ein solcher Tandem-Wärmetauscher ist beispielsweise aus der DE 11 2011 101 957 T5 bekannt. Er wird dort als Wärmetauscherstruktur bezeichnet und kommt bei einem zumindest teilweise elektrisch angetriebenen Fahrzeug zum Einsatz. Er umfasst einen ersten Außenluftwärmetauscher, der eine Leitungsanordnung aufweist, die von einem ein erstes Medium bildenden Kältemittel einer Klimaanlage durchströmt wird, welche zum Heizen und/oder Kühlen des Innenraums des Fahrzeugs dient. Weiterhin ist ein zweiter Außenluftwärmetauscher vorhanden, der eine Leitungsanordnung umfasst, die von einem Wärmeträger-Medium durchströmt wird, das hier weniger für die Kühlung des elektrischen Antriebsmotors des Fahrzeugs als für eine Nutzung seiner Abwärme (waste heat) gedacht ist, um während des Wärmepumpenbetriebs am ersten Außenluftwärmetauscher des Kältemittelkreislaufs entstandenes Eis abzutauen.

Die Leitungsanordnungen der beiden Wärmetauscher sind strömungsmäßig in dem Sinn vollständig voneinander getrennt, dass sich das Kältemittel und das Wärmeträger-Medium nicht miteinander vermischen können, und werden jeweils von Flachrohren gebildet die durch Löten integral miteinander verbunden sind. Dazwischen sind Luftdurchlässe vorgesehen, durch welche als drittes Medium Außenluft strömen kann, mit der das Kältemittel bzw. der Wärmeträger in Wärmeaustausch treten können.

Aus der Beschreibung der DE 11 2011 101 957 T5 geht hervor, dass diese bekannte Anordnung für die Verwendung in einem PKW ausgelegt ist. Eine Skalierung der bekannten Vorrichtung für eine Verwendung in einem Fahrzeug mit großem Innenvolumen, insbesondere in einem zumindest teilweise elektrisch angetriebenen Omnibus ist nicht möglich.

Die Probleme, die sich für die Temperierung der Traktionsbatterie eines solchen Omnibusses ergeben, werden in der DE 11 2011 101 957 T5 weder angesprochen, noch können sie mit Hilfe der dort beschriebenen Anordnung gelöst werden.

So muss eine derartige Traktionsbatterie je nach Betriebszustand bei niedrigen Umgebungstemperaturen vor Fahrtantritt vorgeheizt, im Fahrbetrieb jedoch häufig mit erheblicher Leistung gekühlt werden, um eine Überhitzung und damit Schädigung der Batteriezellen zu vermeiden. Auch ist eine ausreichende Kühlung nicht nur beim eigentlichen Laden, insbesondere Schnellladen mit hohen Ladeströmen, erforderlich, sondern unabhängig von der jeweiligen Außentemperatur auch sowohl bei der Entnahme als auch der Rückspeisung hoher Leistungen, wie sie bei längeren Bergauf- bzw. Bergab-Fahrten auftreten.

Demgegenüber liegt der Erfindung die Aufgabe zugrunde, einen Tandem-Wärmetauscher der eingangs genannten Art so weiterzubilden, dass durch seine Verwendung ein effizientes Wärmeenergie-Managementsystem für ein Fahrzeug, insbesondere einen Omnibus geschaffen wird, der von einem aus einer Traktionsbatterie gespeisten Elektromotor angetrieben wird.

Zur Lösung dieser Aufgabe sieht die Erfindung einen Tandem-Wärmetauscher gemäß Anspruch 1 und eine Klimaanlage zum Kühlen und/oder Heizen eines Fahrzeuginnenraums nach Anspruch 11 vor.

Der Ausdruck "Außenluftwärmetauscher" bedeutet im vorliegenden Zusammenhang, dass der betreffende Wärmetauscher zur Bewerkstelligung eines Wärmeaustauschs zwischen einem den Innenhohlraum seiner Leitungsanordnung durchströmenden Medium (Kältemittel bzw. Wärmeträger) und der Außen- bzw. Umgebungsluft dient, welche die Außenseite dieser Leitungsanordnung bzw. mit dieser verbundene Lamellen umströmt. Dieser Wärmeaustausch kann je nach Betriebsart in beiden Richtungen, das heißt vom Medium zur Außenluft oder von der Außenluft zum Medium erfolgen

Unter Rundrohren bzw. Rundrohrabschnitten werden im vorliegenden Zusammenhang Rohre bzw. Rohrabschnitte verstanden, die sowohl innen als auch außen einen runden, vorzugsweise kreisförmigen Querschnitt besitzen.

Gegenüber den aus dem Stand der Technik bekannten Flachrohr-Wärmetauschern besitzen die erfindungsgemäßen Rundrohr-Wärmetauscher erhebliche Vorteile:
- In dem zum Kältemittelkreislauf der Klimaanlage gehörenden ersten Außenluftwärmetauscher wird unabhängig davon, ob er im Kühlbetrieb als Verflüssiger oder im Heizbetrieb als Verdampfer arbeitet, eine wesentlich bessere Verteilung des Kältemittels ermöglicht. Insbesondere ist eine spezielle Auslegung dieses Außenluftwärmetauschers auf den Kühl- oder Heizbetrieb nicht erforderlich.
   Im Kühlbetrieb ergibt sich ein geringerer Druckverlust des Kältemittels als beim Stand der Technik, sodass die Leistungsaufnahme des Kompressors niedriger ist.
- Auch in dem zum Wärmeträgerkreislauf gehörenden zweiten Außenluftwärmetauscher tritt wegen der im Vergleich zu den Flachrohren des Standes der Technik großzügigeren Bemessung des Innenquerschnitts der Rundrohrabschnitte, die hier den Strömungspfad bilden, ein geringerer Druckverlust auf, sodass die Umwälzpumpe dieses Kreislaufes mit einer geringeren Leistungsaufnahme auskommt.

Gemäß der Erfindung sind die beiden Außenluftwärmetauscher zwar in unmittelbarer Nachbarschaft zueinander aber doch in dem Sinn räumlich voneinander getrennt angeordnet, dass die den Strömungspfad des einen bildenden Rundrohrabschnitte keinen unmittelbaren körperlichen Kontakt zu den Rundrohrabschnitten des anderen Außenluftwärmetauschers haben.

Die Lamellen, die mit den Rundrohrabschnitten der beiden Außenluftwärmetauscher in mechanischer Verbindung stehen, und auf diese vorzugsweise aufgepresst sind, dienen primär einer Wärmeübertragung auf die zwischen ihnen hindurch strömende Außenluft und dazu, die beiden Außenluftwärmetauscher zu einer einen Tandem-Wärmetauscher bildenden Baueinheit zu verbinden und dabei deren vorteilhafte Positionierung sicherzustellen, gemäß derer der Außenluftwärmetauscher, der zum Wärmeträgerkreislauf gehört, zuerst, das heißt vor dem Außenluftwärmetauscher der Klimaanlage von der Außenluft durchströmt wird. Die durch die Lamellen erfolgende Wärmeübertragung von den Rundrohrabschnitten des einen Außenluftwärmetauschers auf die des anderen spielt eine eher untergeordnete Rolle.

Bei der Erläuterung des erfindungsgemäßen Tandem-Wärmetauschers und einer mit ihm ausgestatteten Klimaanlage wird als wesentlichste Fahrzeug-Komponente, die temperiert werden muss, die Traktionsbatterie eines elektrisch angetriebenen Omnibusses betrachtet. Dabei wird der Ausdruck "zum Temperieren wenigstens einer Fahrzeug-Komponente" verwendet, um zwei unterschiedliche Betriebsabläufe des Wärmeträgerkreislaufes zu erfassen:
a) Die Traktionsbatterie eines Omnibusses muss nach einer Nachtruhe des Fahrzeugs in einer kühlen Umgebung zunächst erwärmt werden, um die Batteriezellen möglichst rasch auf eine optimale Arbeitstemperatur zu bringen, die im allgemeinen zwischen 18 °C und 25 °C liegt.
   Bei ausreichend über dem Gefrierpunkt liegenden Außentemperaturen ist dies mit dem erfindungsgemäßen Tandem-Wärmetauscher möglich, ohne dass die Klimaanlage in Betrieb sein muss, weil in diesem Fall der den Tandem-Wärmetauscher durchströmenden Außenluft genügend Wärme entzogen werden kann, um die gewünschte Vorheizwirkung zu erzielen.
   Sind die Außentemperaturen hierfür zu niedrig, kann die Klimaanlage kurz im Kühlbetrieb (für den Fahrzeuginnenraum) arbeiten, um vermittels des Tandem-Wärmetauschers die benötigte Wärme an den Wärmeträger-Kreislauf zu liefern.
b) Bei einer Schnellladung und im eigentlichen Fahrbetrieb kann die von der Traktionsbatterie abzuführende Wärme unabhängig davon, ob die Klimaanlage in Betrieb ist oder nicht, über den zweiten Außenluftwärmetauscher des Tandem-Wärmetauschers an die Außenluft AL abgegeben werden.

Dadurch, dass der zum Wärmeträger Kreislauf gehörende zweite Außenluftwärmetauscher in Strömungsrichtung der Außenluft gesehen vor dem zur Klimaanlage gehörenden ersten Außenluftwärmetauscher angeordnet ist, beeinträchtigen sich diese beiden Wärmetauscher zumindest bei Außenluft-Temperaturen bis 28 °C in ihrer Kühlwirkung auch dann nicht, wenn gleichzeitig das Kühlwasser für die Traktionsbatterie von beispielsweise 40 °C auf 25 °C heruntergekühlt werden muss, während das Kältemittel der Klimaanlage im Kühlbetrieb von 60 °C auf 50 °C gekühlt wird, um eine ausreichende Verflüssigung des Kältemittels zu erzielen.

Dem Tandem-Wärmetauscher ist eine vorzugsweise von Axialgebläsen gebildete Gebläseanordnung zugeordnet, mit deren Hilfe ein Außenluftstrom erzeugt wird, der an der gesamten Oberfläche der Lamellen entlang strömt.

Im Wärmepumpen-Betrieb kann bei niedrigen Temperaturen durch den Tandem-Wärmetauscher dem die Traktionsbatterie kühlenden Wärmeträgerkreislauf, mit wenig Aufwand sehr viel Energie entzogen und über den ersten Außenluftwärmetauscher zur Heizung des Fahrzeuginnenraums genutzt werden.

Auch wenn die Klimaanlage nicht in Betrieb ist oder im Kühlmodus arbeitet, kann dem Wärmeträgerkreislauf für die Traktionsbatterie Energie dadurch entzogen werden, dass die Gebläseanordnung des Tandem-Wärmetauschers eingeschaltet wird.

Umgekehrt ist es auch möglich, mithilfe des Tandem-Wärmetauschers der Traktionsbatterie Wärme zuzuführen, wenn diese vor oder bei der Inbetriebnahme vorgeheizt werden soll.

Liegt die Temperatur im Wärmeträgerkreislauf der Traktionsbatterie unter der Außentemperatur, so kann durch die Verwendung des erfindungsgemäßen Tandem-Wärmetauschers der Wirkungsgrad der Klimaanlage verbessert werden, da in diesem Fall der Wärmeträgerkreislauf der Traktionsbatterie zu einer Kühlung des Kältemittels der Klimaanlage beitragen kann.

Bei herkömmlichen Klimaanlagen kann es im Wärmepumpenbetrieb zur Vereisung des ersten Außenluftwärmetauschers kommen. Bei der Verwendung eines erfindungsgemäßen Tandem-Wärmetauschers kann eine solche Vereisung durch Zufuhr von Wärmeenergie aus dem Wärmeträgerkreislauf entweder verhindert oder zumindest verzögert werden.

Insgesamt ist ein wesentlicher Vorteil des erfindungsgemäßen Tandem-Wärmetauschers darin zu sehen, dass die beiden über ihn gekoppelten Kreisläufe entweder gemeinsam gleichzeitig oder einzeln voneinander unabhängig betrieben werden können.

Die Erfindung wird im Folgenden anhand von Ausführungsbeispielen unter Bezugnahme auf die Zeichnung näher erläutert; in dieser zeigen:
- Fig. 1: eine stark schematisierte Draufsicht auf eine auf dem Dach eines Fahrzeugs angeordnete Aufdachklimaanlage mit einem erfindungsgemäßen Tandem-Wärmetauscher,
- Fig. 2: eine vergrößerte Darstellung des Tandem-Wärmetauschers der Aufdachklimaanlage aus Fig. 1, und
- Fig. 3: eine der Fig. 1 ähnliche Draufsicht auf ein weiteres Ausführungsbeispiel einer auf dem Dach eines Fahrzeugs angeordneten Aufdachklimaanlage.

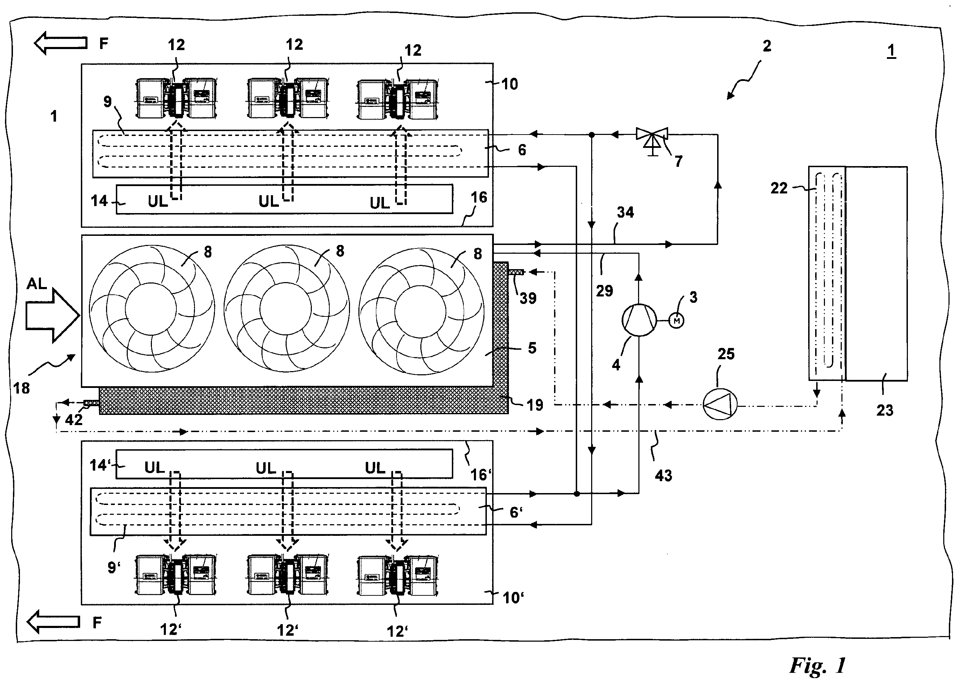

Fig. 1 zeigt eine Draufsicht auf eine erfindungsgemäße Klimaanlage 2, die in diesem Ausführungsbeispiel als Aufdachklimaanlage ausgebildet und auf einem durch Freihandlinien begrenzten Bereich der Oberseite eines Fahrzeugdaches 1 montiert ist. Der besseren Übersichtlichkeit halber wird die Klimaanlage 2 in diesem Ausführungsbeispiel als Anlage beschrieben, die nur zum Kühlen des Innenraums eines Omnibusses dient. Zu diesem Zweck weist sie einen Kältemittelkreislauf auf, der in der üblichen Weise unter anderem einen von einem Elektromotor 3 angetriebenen Kompressor 4, mit diesem über Rohrleitungen verbundene Wärmetauscher, nämlich einen hier ausschließlich als Kondensator arbeitenden ersten Außenluftwärmetauscher 5 des Tandem-Wärmetauschers 18, zwei hier ausschließlich als Verdampfer arbeitende Innenbereich-Wärmetauscher 6, 6' und ein Expansionsventil 7 umfasst.

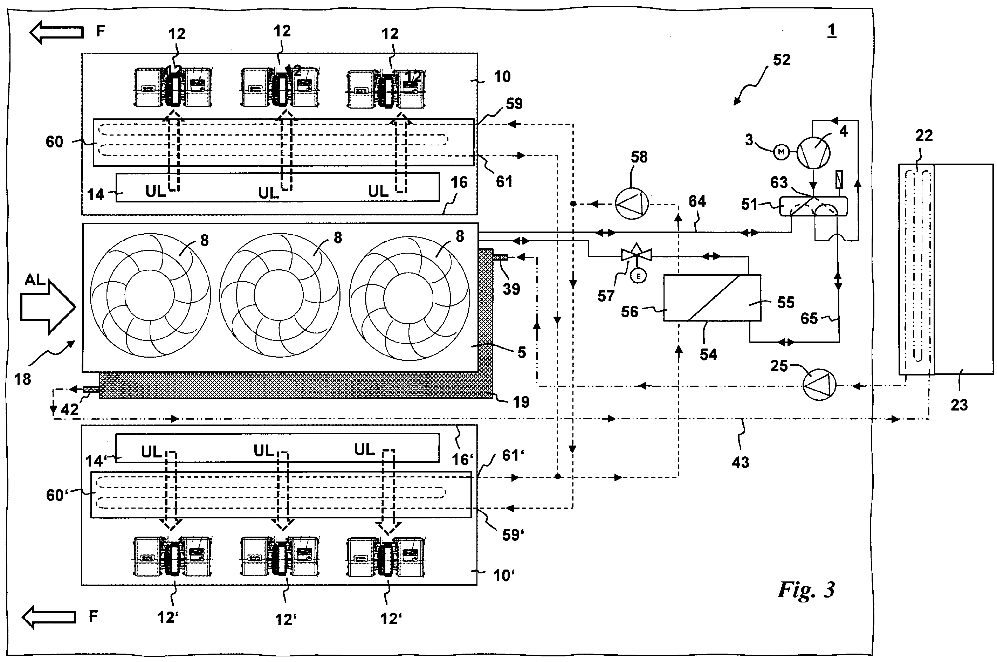

Dem Fachmann ist aber ohne weiteres klar, dass auch diese Klimaanlage 2 so ausgerüstet werden kann, dass sie sowohl für einen Kühl- als auch einen Heizbetrieb geeignet ist, wie dies weiter unten unter Bezugnahme auf Fig. 3 für die dort gezeigte Klimaanlage 52 genauer erläutert wird

In dem in Fig. 1 gezeigten, auf dem Fahrzeugdach 1 montierten Zustand der Klimaanlage 2 sind drei Axialgebläse 8 so oberhalb des ersten Außenluftwärmetauschers 5 angeordnet, dass sie im Betrieb durch ihre Saugwirkung über das Fahrzeugdach 1 strömende Außenluft (siehe Pfeil AL) in etwa vertikal nach oben umlenken, sodass sie den ersten Außenluftwärmetauscher 5 von unten nach oben durchströmt und diesem Wärme entziehen kann, die dann in die Umgebung abgegeben wird.

Jeder der beiden Innenbereich-Wärmetauscher 6 bzw. 6' weist im Wesentlichen die Form eines in Fahrtrichtung F langgestreckten, Quaders auf, umfasst eine mehrfach gewundene Rohrschlange 9, 9', und ist im Inneren eines Gehäuses 10 bzw. 10' stehend angeordnet, das in Fahrtrichtung gesehen links bzw. rechts vom ersten Außenluftwärmetauscher 5 oberhalb des Fahrzeugdaches 1 positioniert ist.

In den Rohrschlangen 9, 9' verdampft das vom Expansionsventil 7 der Klimaanlage 2 kommende Kältemittel und entzieht dabei der Umgebung des jeweiligen Innenbereich-Wärmetauschers 6 bzw. 6', und insbesondere der ihn durchströmenden Luft Wärme, sodass sich diese erheblich abkühlt. Um diese abgekühlte Luft dem Fahrzeuginnenraum zuzuführen, sind in jedem der Gehäuse 10, 10' auf der vom ersten Außenluftwärmetauscher 5 abgewandten Seite des betreffenden Innenbereich-Wärmetauschers 6 bzw. 6' drei Radialgebläse-Einheiten 12 bzw. 12' vorgesehen, die im Betrieb Luft durch Umluft-Ansaugöffnungen 14 bzw. 14' aus dem Fahrzeuginnenraum ansaugen und so umlenken, dass sie den zugehörigen Innenbereich-Wärmetauscher 6 bzw. 6' in etwa horizontal durchströmt (, wie dies durch die Pfeile UL angedeutet ist), wonach sie durch Umluft-Rückführöffnungen, die in der Draufsicht der Fig. 1 durch die Radialgebläse-Einheiten 12 bzw. 12' verdeckt sind, wieder in den Fahrzeuginnenraum zurückgeführt wird.

In den auf einander zuweisenden Seitenwänden 16,16' der Gehäuse 10, 10' sind in der Fig. 1 nicht sichtbare Schlitze vorgesehen, durch die hindurch ein Teil der Außenluft AL, die nicht nur dann, wenn die Axialgebläse 8 laufen, sondern auch bei deren Stillstand zumindest bei einer Vorwärtsbewegung des Fahrzeugs zwischen den Gehäusen 10, 10' hindurchströmt, in deren Innenraum eintreten und sich dort mit der Umluft UL vermischen kann. Mithilfe von ebenfalls nicht dargestellten Schiebern und/oder Klappen kann die Menge der beigemischten Außenluft verändert werden.

An den durch durchgezogene Linien wiedergegebenen Verbindungs-Rohrleitungen der Klimaanlage 2 sind die Strömungsrichtungen des Kältemittels während des Kühlbetriebs durch Pfeile angedeutet, deren Richtung sich bei einem Wärmepumpen-Betrieb umkehrt.

Der erste Außenluftwärmetauscher 5 bildet gemäß der Erfindung den oberen Bereich eines Tandem-Wärmetauschers 18, der zusätzlich zum ersten Außenluftwärmetauscher 5 einen zweiten Außenluftwärmetauscher 19 aufweist, der in etwa die gleichen Grund- bzw. Hauptflächen aufweist wie der erste Außenluftwärmetauscher 5. Obwohl diese beiden Außenluftwärmetauscher 5,19 des Tandem-Wärmetauschers 18 im montierten Zustand der Aufdachklimaanlage 2 in etwa deckungsgleich übereinander angeordnet sind, sind sie in Fig. 1 der der Deutlichkeit halber gegeneinander versetzt dargestellt.

Der zweite, untere Außenluftwärmetauscher 19 des Tandem-Wärmetauschers 18 ist Teil eines Wärmeträgerkreislaufs, vermittels dessen über einen weiteren Wärmetauscher 22 der Wärmehaushalt einer zu temperierenden Fahrzeugkomponente 23, hier einer Traktionsbatterie des zumindest teilweise elektrisch angetriebenen Omnibusses steuerbar ist. In den durch strichpuktierte Linien wiedergegebenen Rohren dieses Wärmeträgerkreislaufs zirkuliert unter der Wirkung einer Pumpe 25 als Wärmeträger beispielsweise mit einem Frostschutzmittel (Glykol) versetztes Wasser. Auch hier sind die Strömungsrichtungen durch Pfeile angedeutet. Anders als in dem zuvor beschriebenen Kältemittelkreislauf findet hier kein Phasenwechsel, das heißt weder eine zu einer Erhitzung führende Verdichtung noch eine über ein Expansionsventil erfolgende Verdampfung und Abkühlung des zirkulierenden Mediums statt.

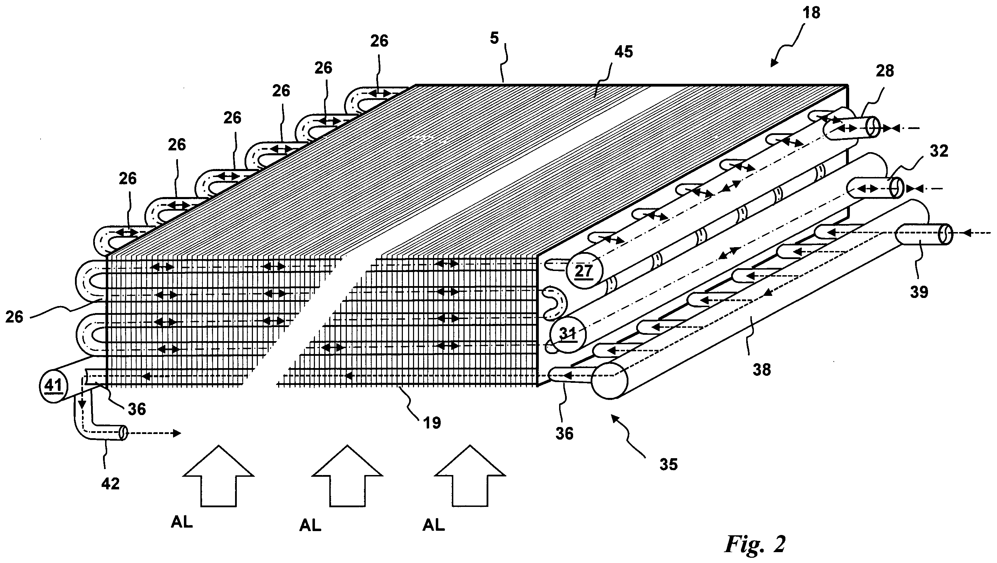

Wie Fig. 2 zeigt, umfasst der erste Außenluftwärmetauscher 5 eines erfindungsgemäßen Tandem-Wärmetauschers 18 eine Leitungsanordnung, die ein integraler Bestandteil des Kältemittelkreislaufes der Klimaanlage 2 ist und bei diesem Ausführungsbeispiel in vier in Strömungsrichtung der Außenluft AL hintereinander (, das heißt in Fig. 2 übereinander) liegenden Ebenen jeweils sieben Rundrohrabschnitte 26 umfasst, die zueinander parallel verlaufen und durch U-förmig gekrümmte, mit den Rundrohrabschnitten 26 einstückig ausgebildete Verbinder zur Bildung eines durchgehenden Strömungspfades miteinander verbunden sind, wobei diese Verbinder im Wesentlichen den gleichen Innendurchmesser wie die Rundrohrabschnitte 26 besitzen. Auf der in Fig. 2 rechten Seite stehen die freien Enden der Rundrohrabschnitte 26 der obersten Ebene strömungsmäßig mit einem ersten Verbindungsrohr 27 in Verbindung, das senkrecht zur Längsrichtung der Rundrohrabschnitte 26 verläuft und einen wesentlich größeren kreisförmigen Querschnitt aufweist als diese. Das erste Verbindungsrohr 27 steht über einen Stutzen 28 und eine Leitung 29 (siehe Fig. 1) mit dem Druckausgang des Kompressors 4 in Verbindung, sodass im Kühlbetrieb der Klimaanlage 2 das Kältemittel, das sich bei der durch den Kompressor 4 bewirkten Kompression erhitzt, durch den von den Rundrohrabschnitten 26 und den U-förmig gekrümmten Verbindern gebildeten Strömungspfad hindurchströmen und seine Wärme an die Umgebungsluft AL abgeben kann, wie dies weiter und noch genauer geschildert wird.

Die in Fig. 2 ebenfalls rechts dargestellten freien Enden der Rundrohrabschnitte 26 der untersten Ebene sind strömungsmäßig mit einem zweiten, quer zur Längsrichtung der Rundrohrabschnitte 26 verlaufenden Verbindungsrohr 31 verbunden, dessen Stutzen 32 über die Leitung 34 (siehe Fig. 1) mit der Eingangsseite des Expansionsventils 7 strömungsmäßig in Verbindung steht.

Die Innendurchmesser der Rundrohrabschnitte 26 und der mit Ihnen einstückig ausgebildeten Verbinder liegt bei einem erfindungsgemäßen Außenluftwärmetauscher 5 typischerweise in einem Bereich von 5 mm bis 9,52 mm, sodass die lichte Weite des Innenhohlraums des dem Kältemittel zur Verfügung stehenden Strömungspfades wesentlich größer ist als bei den gemäß dem Stand der Technik zum Einsatz kommenden Flachrohr-Wärmetauschern, woraus sich ein erheblich verminderter Strömungswiderstand und ein geringerer Druckabfall über die Länge des gesamten Strömungspfades ergibt. Dadurch vermindert sich auch die Leistungsaufnahme des Kompressors 4 der Klimaanlage 2, was für die Traktionsbatterie von elektrisch angetriebenen Fahrzeugen einen erheblichen Vorteil darstellt. Die Innendurchmesser der Verbindungsrohr 27 und 31 liegen vorzugsweise in einem Bereich von 12 mm bis 24 mm.

Die in Fig. 2 wiedergegebene Anzahl der Rundrohrabschnitte 26 des Außenluftwärmetauschers 5 sowie der vertikal übereinander angeordneten Ebenen, in denen diese verlaufen, ist jeweils nur beispielhaft und keinesfalls einschränkend zu verstehen. Vielmehr kann ein erster Außenluftwärmetauscher 5 eines erfindungsgemäßen Tandem-Wärmetauschers 18 auch weniger, vorzugsweise aber mehr in Strömungsrichtung der Außenluft AL hintereinander (das heißt in Bestands Fig. 2 übereinander) angeordnete Ebenen umfassen, von denen jede weniger, vorzugsweise aber mehr als sieben zueinander parallel verlaufende Rundrohrabschnitte 26 aufweisen kann. Diese Werte können je nach Bedarf verändert, insbesondere zur Erzielung größerer Wärmetauscher-Leistungen vergrößert werden.

Der zweite Außenwärmetauscher 19 des Tandem-Wärmetauschers 18 weist bei diesem Ausführungsbeispiel nur eine einzige horizontale Ebene mit einem Rohrsystem 35 auf, das sieben nebeneinander angeordnete Rundrohrabschnitte 36 umfasst, die zueinander parallel verlaufen, wobei ihre in Fig. 2 rechts unten vorstehenden Eintrittsenden mit einem Verteilerrohr 38 strömungsmäßig verbunden sind, in das über einen Zuführstutzen 39 der mithilfe der Pumpe 25 (siehe Fig. 1) geförderte Wärmeträger des Wärmeträgerkreislaufes hineinströmt, der zur Temperierung einer Fahrzeugkomponente 23, das heißt hier der Traktionsbatterie des zumindest teilweise elektrisch angetriebenen Omnibusses dient.

Die auf der gegenüberliegenden, in Fig. 2 linken Seite befindlichen Austrittsenden der Rundrohrabschnitte 36 des zweiten Außenluftwärmetauschers 19 sind strömungsmäßig mit einem Sammelrohr 41 verbunden, das über einen Abführstutzen 42 und eine Leitung 43 (siehe Fig. 1) mit dem Eingang des weiteren Wärmetauschers 22 an der zu temperierenden Fahrzeugkomponente (Batterie) in strömungsmäßig Verbindung steht.

Auch für den zweiten Außenluftwärmetauscher 19 gilt, dass er in Abweichung von der Darstellung der Fig. 2 im Bedarfsfall mehrere vertikal übereinander angeordnete Ebenen mit jeweils einer anderen Zahl von Rundrohrabschnitten 36 umfassen kann.

Ein wesentlicher Unterschied zwischen den in Fig. 2 gezeigten Außenluftwärmetauschern besteht darin, dass die Rundrohrabschnitte 26 des ersten Außenluftwärmetauschers 5 strömungsmäßig seriell miteinander verbunden sind, sodass sie einen einzigen durchgehenden Strömungspfad bilden. Demgegenüber sind die Rundrohrabschnitte 36 des zweiten Außenluftwärmetauschers 19 nicht nur geometrisch sondern auch strömungsmäßig parallel zueinander angeordnet, das heißt jedes stellt eine unmittelbare Verbindung zwischen dem Verteilerrohr 38 und dem Sammelrohr 41 her. Dies hat den Vorteil, dass an diesem zweiten Außenluftwärmetauscher 19 ein geringerer Druckabfall auftritt, sodass die Pumpe 25 des Wärmeträger-Kreislaufes eine geringere Leistungsaufnahme hat.

Bei dem ersten Außenluftwärmetauscher 5 ist die strömungsmäßig serielle Anordnung der Rundrohrabschnitte 26 von Vorteil, weil sie je nach Betriebsart (Heiz- oder Kühlbetrieb) die Verdampfung bzw. Kondensation des Kältemittels begünstigt.

Wie der Fig. 2 weiterhin zu entnehmen ist, sind auf die Rundrohrabschnitte 26 und 36 der beiden Außenluftwärmetauscher 5, 19 Lamellen 45 aus einem wärmeleitenden Material aufgepresst, um für den Tandem-Wärmetauscher 18 eine möglichst große Wärmeaustausch-Oberfläche zu erzielen. Die Lamellen 45 erzeugen zwischen den beiden Gruppen von Rundrohrabschnitten 26 und 36 eine relativ geringe Wärmekopplung, die es ermöglicht, die Klimaanlage 2 und den zur Temperierung der Traktionsbatterie dienenden Wärmeträgerkreislauf voneinander unabhängig entweder einzeln oder beide gemeinsam für Kühlzwecke zu betreiben.

Vorteilhaft ist dabei, dass der Außenluftstrom AL zunächst auf den zweiten Außenluftwärmetauscher 19 trifft, der die von der Traktionsbatterie kommende Wärme abzuführen hat, und erst dann auf den ersten Außenluftwärmetauscher 5, weil die Temperatur, auf der die Traktionsbatterie gehalten wird, deutlich niedriger ist, als die Temperatur, die sich durch die Kompression des Kältemittels der Aufdachklimaanlage 2 im ersten Außenluftwärmetauscher 5 ergibt, sodass die Temperaturdifferenz der im zweiten Außenluftwärmetauscher 19 vorerwärmten Außenluft zur Temperatur des ersten Außenluftwärmetauschers 5 immer noch ausreichend groß ist, um einen effizienten Wärmeübergang zu gewährleisten.

In Fig. 2 sind im ersten Außenluftwärmetauscher 5 einander entgegengerichtete: Doppelpfeile eingetragen, um zu verdeutlichen, dass sich hier die Strömungsrichtung des Kältemittels umkehren kann wenn er, anders als bisher beschrieben in einer Klimaanlage Verwendung findet, die sowohl zum Kühlen als auch zum Heizen des Fahrzeuginnenraums verwendet werden kann, wie dies Folgenden unter Bezugnahme auf Fig. 3 genauer erläutert wird.

Bei dem in Fig. 3 dargestellten, weiteren Ausführungsbeispiel einer mit einem erfindungsgemäßen Tandem-Wärmetauscher 5 ausgestatteten Aufdachklimaanlage 52 sind alle Komponenten, die hier in gleicher Weise vorhanden sind wie bei dem Ausführungsbeispiel aus Fig. 1 mit den gleichen Bezugszeichen bezeichnet; ihre Funktion und Anordnung werden zur Vermeidung von Wiederholungen nicht noch einmal im Detail beschrieben.

Ein erster wesentlicher Unterschied zwischen den beiden Aufdachklimaanlagen 2 und 52 besteht darin, dass letztere für einen Betrieb mit einem brennbaren Kältemittel ausgelegt ist, wie dies im deutschen Gebrauchsmusters DE 20 2003 002 534.6 beschrieben wird.

Zu diesem Zweck besitzt die Aufdachklimaanlage 52 nur einen einzigen Innenbereich-Wärmetauscher 54, der nicht im Umluft-Strömungsbereich in den Gehäusen 10, 10' sondern in möglichst großer Entfernung von den mit dem Fahrzeuginnenraum in Verbindung stehenden Umluft-Ansaugöffnungen 14, 14' und Umluft-Rückführöffnungen positioniert und als Platten-Wärmetauscher ausgebildet, dessen Primärseite 55 strömungsmäßig in den hier mit durchgezogenen Linien dargestellten Kältemittelkreislauf der Aufdachklimaanlage 52 eingebunden ist, während seine gegen die Primärseite 55 hermetisch abgedichtete Sekundärseite 56 einen integralen Bestandteil eines mit gestrichelten Linien dargestellten Sekundärkreislaufes bildet, in dem ein Wärmeträger-Medium, beispielsweise mit Glykol versetztes Wasser zirkuliert, das mithilfe einer Pumpe 58 den Vorlaufeingängen 59, 59' von Sekundärwärmetauschern 60, 60' zugeführt wird, die in ähnlicher Weise wie die Wärmetauscher 6, 6' aus Fig. 1 ausgebildet und gemeinsam mit Radialgebläse-Einheiten 12, 12' in Gehäusen 10, 10 untergebracht sind, um einen Wärmeaustausch mit Umluft UL zu ermöglichen, die dem Fahrzeuginneren entnommen und dann mithilfe der Radialgebläse-Einheiten 12, 12' - eventuell nach einer gesteuerten Vermischung mit Außenluft - wieder in den Fahrzeuginnenraum zurückgeführt wird. Von den Rücklaufausgängen 61, 61' der Sekundärwärmetauscher 60, 60' strömt das Wärmeträgermedium zurück zur Sekundärseite 56 des Innenbereich-Wärmetauschers 54, um dort in Wärmeaustausch mit dem die Primärseite 55 durchströmenden Kältemittel der Aufdachklimaanlage 52 zu treten.

Während also sowohl die Innenluft- als auch der Außenluft-Wärmetauscher 5 der Aufdachklimaanlage 2 aus Fig. 1 von der (je nach Betriebsart entweder als Wärmesenke oder als Wärmequelle dienenden) Luft AL bzw. UL direkt durchströmt werden, trifft dies bei dem in Fig. 3 gezeigten Ausführungsbeispiel nur für den Außenluft-Wärmetauscher 5 zu, während der Innenluft-Wärmetauscher 54 mit der Umgebungsluft UL nur indirekt, vermittels des erwähnten Sekundärkreislaufes in Wärmeaustausch treten kann.

Sinn dieser Anordnung ist es unter anderem, eine möglichst große räumliche Trennung zwischen dem Kältemittel-Kreislauf der Aufdachklimaanlage 52, in dem das brennbare Kältemittel zirkuliert, und den Umluft-Strömungsbereichen zu erzielen, um zu verhindern, dass sich bei einer eventuellen Leckage austretendes Kältemittel mit der für den Fahrzeuginnenraum bestimmten Luft vermischen und mit dieser ein zündfähiges Gemisch bilden kann.

Wie bereits erwähnt, besteht ein weiterer Unterschied zwischen den beiden Aufdachklimaanlagen 2 und 52 besteht darin, dass letztere nicht nur im Kühl- sondern auch im Heizmodus arbeiten kann, um gewünschten Falls den Fahrzeuginnenraum zu erwärmen. Um dies zu ermöglichen, können sowohl der erste Außenluftwärmetauscher 5 des Tandem-Wärmetauschers 18 als auch der Innenbereich-Wärmetauscher 54 im gegenseitigen Wechsel entweder als Kondensator oder als Verdampfer der Klimaanlage 52 betrieben werden.

Zu diesem Zweck umfasst die Aufdachklimaanlage 52 ein 4-Wege-Umschaltventil 51 dessen mit den Kompressor 4 verbundener Strömungseingang 63 wahlweise über eine Leitung 64 mit einem ersten Strömungsanschluss des Außenluftwärmetauschers 5 (Kühlbetrieb) oder über eine Leitung 65 mit einem Strömungsanschluss der Primärseite 55 des Innenbereich-Wärmetauschers 54 (Heizbetrieb) verbunden werden kann. Der gegenüberliegende Strömungsanschluss der Primärseite 55 ist mit einem Anschluss eines Expansionsventils 57 verbunden, dessen Durchströmungsrichtung durch eine elektrische Steuerung umgekehrt werden kann und dessen andere Seite mit dem zweiten der beiden Strömungsanschlüsse des ersten Außenluftwärmetauschers 5 des Tandem-Wärmetauschers 18 verbunden ist.

Durch die an den Leitungen des Kältemittelkreislaufs der Aufdachklimaanlage 52 eingezeichneten, einander entgegengerichteten Strömungspfeile wird angedeutet, dass die Strömungsrichtung hier im Heizbetrieb der Strömungsrichtung im Kühlbetrieb entgegen gerichtet ist.

Wie bereits erwähnt, besteht ein besonderer Vorteil des ersten Außenluftwärmetauschers 5 des erfindungsgemäßen Tandem-Wärmetauschers darin, dass er für beide Betriebsarten, das heißt sowohl als Kondensator als auch als Verdampfer der Klimaanlage gleichermaßen geeignet ist, weil seine beschriebenen konstruktiven Merkmale nicht für eine Umkehr der Strömungsrichtung und die andere Aggregats-Zustandsänderung des Kältemittels geändert werden müssen.

Neben dem Kältemittelkreislauf der Aufdachklimaanlage 52 sind bei diesem Ausführungsbeispiel anders als bei der Aufdachklimaanlage 2 aus Fig. 1 zwei Wärmeträger-Kreisläufe vorhanden, von denen der eine zur Trennung des mit einem brennbaren Kältemittel arbeitenden Kältemittelkreislaufs der Aufdachklimaanlage 52 und der andere zur Temperierung der Fahrzeugkomponente, hier der Traktionsbatterie 23 dient, die bei diesem Beispiel mit ihrem mit ihr in Wärmeaustausch stehenden weitere Wärmetauscher 22 außerhalb des Bereiches 1 des Fahrzeugdaches dargestellt ist, um anzudeuten, dass diese Einheiten auch an einer anderen Stelle des elektrisch angetriebenen Omnibusses positioniert sein können; gleiches gilt auch für die in Fig. 1 gezeigte Aufdachklimaanlage 2.

### Bezugszeichenliste

- AL: Außenluft
- UL: Umluft
- F: Fahrtrichtung

- 1: Fahrzeugdach
- 2: Klimaanlage
- 3: Elektromotor
- 4: Kompressor
- 5: erster Außenluftwärmetauscher
- 6, 6': Innenbereich-Wärmetauscher
- 7: Expansionsventil
- 8: Axialgebläse
- 9, 9': Rohrschlangen
- 10,10': Gehäuse
- 12,12': Radialgebläse-Einheiten
- 14,14': Umluft-Ansaugöffnungen
- 16,16': Seitenwände
- 18: Tandem-Wärmetauscher
- 19: zweiter Außenluftwärmetauscher
- 22: weiterer Wärmetauscher
- 23: zu temperierende Fahrzeugkomponente (Batterie)

- 25: Pumpe des Wärmeträger-Kreislaufs
- 26: Rundrohrabschnitte des ersten Außenluftwärmetauschers
- 27: erstes Verbindungsrohr
- 28: Stutzen
- 29: Leitung
- 31: zweites Verbindungsrohr
- 32: Stutzen
- 34: Leitung
- 35: Rohrsystem
- 36: Rundrohrabschnitte des zweiten Außenluftwärmetauschers
- 38: Verteilerrohr
- 39: Zuführstutzen
- 41: Sammelrohr
- 42: Abführstutzen
- 43: Leitung
- 45: Lamellen
- 51: 4-Wege-Umschaltventil
- 52: Aufdachklimaanlage
- 54: Innenbereich-Wärmetauscher
- 55: Primärseite des Innenbereich-Wärmetauschers
- 56: Sekundärseite des Innenbereich-Wärmetauschers
- 58: Pumpe
- 59, 59': Vorlaufeingänge
- 60, 60': Sekundär-Wärmetauscher
- 61, 61': Rücklaufausgänge
- 63: Strömungseingang des 4-Wege-Umschaltventils
- 64: Leitung
- 65: Leitung

## Patentansprüche

1. Tandem-Wärmetauscher (18), der Folgendes umfasst:
- einen ersten Außenluftwärmetauscher (5) mit einer Leitungsanordnung, die einen Strömungspfad bildet, der Teil eines Kältemittelkreislaufs einer zum Heizen und/oder Kühlen des Innenraums eines Fahrzeuges dienenden Klimaanlage (2; 52) ist,
- einen zweiten Außenluftwärmetauscher (19), mit einer Leitungsanordnung, die einen Strömungspfad bildet, der Teil eines Wärmeträgerkreislaufs ist, der zum Temperieren wenigstens einer Fahrzeug-Komponente (23) dient,
- wobei die beiden Strömungspfade so voneinander getrennt sind, dass sich die in ihnen zirkulierenden Fluide nicht miteinander vermischen können,
**dadurch gekennzeichnet,**
**dass** jeder der Strömungspfade der beiden Außenluftwärmetauscher (5 bzw. 19) miteinander verbundene Rundrohrabschnitte (26 bzw. 36) umfasst,
**dass** die beiden Außenluftwärmetauscher (5 bzw. 19) in Strömungsrichtung der Außenluft (AL) hintereinander angeordnet sind, und
**dass** die Rundrohrabschnitte (26 bzw. 36) der beiden Außenluftwärmetauscher (5 bzw. 19) mit gemeinsamen Lamellen (45) aus einem wärmeleitenden Material in körperlicher Verbindung stehen, wobei die Lamellen (45), deren Zwischenräume im Betrieb von Außenluft (AL) durchströmt werden, die beiden Außenluftwärmetauscher (5,19) zur Bildung des Tandem-Wärmetauschers (18) miteinander verbinden.

2. Tandem-Wärmetauscher (18) nach Anspruch 1, **dadurch gekennzeichnet,**
**dass** die beiden Außenluftwärmetauscher (5, 19) jeweils quaderförmige Außenkonturen mit zwei einander gegenüberliegenden Hauptflächen, aufweisen, welche gleiche Abmessungen besitzen,
und **dass** der zweite Außenluftwärmetauscher (19) in Strömungsrichtung der Außenluft (AL) vor dem ersten Außenluftwärmetauschers (5) so angeordnet ist, dass seine hintere Hauptfläche mit der vorderen Hauptfläche des ersten Außenluftwärmetauschers (5) zusammenfällt.

3. Tandem-Wärmetauscher (18) nach Anspruch 2, **dadurch gekennzeichnet, dass** jede der Leitungsanordnungen der beiden Außenluftwärmetauscher (5 bzw. 19) wenigstens eine zu den Hauptflächen parallele Rohrleitungsebene umfasst, in der geradlinige Rundrohrabschnitte (26 bzw. 36) des jeweiligen Strömungspfades nebeneinander liegen und parallel zueinander von einer Stirnfläche zur anderen verlaufen.

4. Tandem-Wärmetauscher (18) nach Anspruch 3, **dadurch gekennzeichnet, dass** der erste Außenluftwärmetauscher (5) mehrere in Strömungsrichtung der Außenluft (AL) hintereinander angeordnete Rohrleitungsebenen umfasst.

5. Tandem-Wärmetauscher (18) nach Anspruch 4, **dadurch gekennzeichnet, dass** die Enden der Rundrohrabschnitte (26) der in Strömungsrichtung der Außenluft (AL) hintersten Rohrleitungsebene an einer der beiden Stirnflächen mit einem ersten Verbindungsrohr (27) strömungsmäßig in Verbindung stehen und an der gegenüberliegenden Stirnfläche jeweils mit einem entsprechenden Ende eines Rundrohrabschnitts (26) der benachbarten, in Strömungsrichtung der Außenluft (AL) davor liegenden Rohrleitungsebene vermittels eines U-förmig gekrümmten Rohrabschnitts strömungsmäßig verbunden sind.

6. Tandem-Wärmetauscher (18) nach Anspruch 4 oder 5, **dadurch gekennzeichnet, dass** die Enden der Rundrohrabschnitte (26) der in Strömungsrichtung der Außenluft (AL) vordersten Rohrleitungsebene an einer der beiden Stirnflächen mit einem Verbindungsrohr (31) strömungsmäßig in Verbindung stehen und an der gegenüberliegenden Stirnfläche jeweils mit einem entsprechenden Ende eines Rundrohrabschnitts (26) der benachbarten, in Strömungsrichtung der Außenluft (AL) dahinter liegenden Rohrleitungsebene vermittels eines U-förmig gekrümmten Rohrabschnitts strömungsmäßig verbunden sind.

7. Tandem-Wärmetauscher (18) nach den Ansprüchen 5 und 6, **dadurch gekennzeichnet, dass** mit Ausnahme der in der in Strömungsrichtung der Außenluft (AL) vordersten und der in der in Strömungsrichtung der Außenluft (AL) hintersten Rohrleitungsebene die Enden der Rundrohrabschnitte (26) an einer der beiden Stirnflächen jeweils mit einem entsprechenden Ende eines Rundrohrabschnitts (26) der benachbarten, in Strömungsrichtung der Außenluft (AL) dahinter liegenden Rohrleitungsebene und an der gegenüberliegenden Stirnfläche mit einem entsprechenden Ende eines Rundrohrabschnitts (26) der benachbarten, in Strömungsrichtung der Außenluft (AL) davor liegenden Rohrleitungsebene vermittels eines U-förmig gekrümmten Rohrabschnitts strömungsmäßig verbunden sind.

8. Tandem-Wärmetauscher (18) nach einem der Ansprüche 5 bis 7, **dadurch gekennzeichnet, dass** die U-förmig gekrümmten Rohrabschnitte mit den Rundrohrabschnitten (26, 26), zu deren Verbindung sie dienen, einstückig ausgebildet sind.

9. Tandem-Wärmetauscher (18) nach Anspruch 3, **dadurch gekennzeichnet, dass** die Rundrohrabschnitte (36) des zweiten Außenluftwärmetauschers (19) an ihren einen Enden durch ein Verteilerrohr (38) und an ihren gegenüberliegenden Enden durch ein Sammelrohr (41) strömungsmäßig miteinander verbunden sind.

10. Tandem-Wärmetauscher (18) nach einem der Ansprüche 2 bis 9, **dadurch gekennzeichnet, dass** sich die zueinander parallelen Hauptflächen der beiden quaderförmigen Außenluftwärmetauscher (5 bzw. 19) im montierten Zustand des Tandem-Wärmetauschers (18) horizontal erstrecken.

11. Klimaanlage (2; 52) zum Kühlen und/oder Heizen eines Fahrzeuginnenraums, deren Kältemittelkreislauf einen Außenluftwärmetauscher (5), einen Innenbereich-Wärmetauscher (6, 6'; 54), einen von einem Elektromotor (3) angetriebenen Kompressor (4) und ein Expansionsventil (7; 57) umfasst,
**dadurch gekennzeichnet,**
**dass** der Außenluftwärmetauscher (5) des Kältemittel-Kreislaufs einen integralen Bestandteil eines Tandem-Wärmetauschers (18) nach einem der Ansprüche 1 bis 10 bildet.

12. Klimaanlage (52) nach Anspruch 11, **dadurch gekennzeichnet, dass** sie als AufdachKlimaanlage ausgebildet ist.

13. Klimaanlage (52) nach Anspruch 12, **dadurch gekennzeichnet, dass** sie für einen Betrieb mit einem brennbaren Kältemittel ausgebildet ist.
